# FASCICULE DE BREVET EUROPEEN

(11) **EP 0 987 533 B1**
(45) Date de publication et mention de la délivrance du brevet: **16.04.2003**
(21) Numéro de dépôt: 99402175.6
(22) Date de dépôt: 03.09.1999
(51) Int. Cl.: G01L 7/08

(54) **Procédé pour réaliser des capteurs à jauge de contrainte**
Verfahren zur Herstellung von Dehnungsaufnehmern
Procedure for making strain sensors

(30) Priorité: 17.09.1998 FR 9811606
(43) Date de publication de la demande: 22.03.2000
(73) Titulaire: SAMPEUR, Yvon, F-77350 Le Mée-sur-Seine (FR); Mestric, Roger, 94800 Villejuif (FR)
(72) Inventeur: SAMPEUR, Yvon, F-77350 Le Mée-sur-Seine (FR); Mestric, Roger, 94800 Villejuif (FR)
(74) Mandataire: Flavenot, Bernard

(56) Documents cités:
- EP-A- 0 710 827
- US-A- 5 791 035

## Description

La présente invention concerne les procédés pour réaliser des capteurs à jauge de contrainte permettant par exemple de mesurer des pressions de fluides ou analogues.

Un tel capteur comporte essentiellement un corps de capteur sur une face duquel sont disposés des moyens de jauge de contrainte.

L'une des techniques utilisées pour réaliser de tels capteurs à jauge de contrainte consiste à usiner séparément chaque corps de capteur, puis à déposer les moyens de jauge de contrainte sur l'une de ses faces. Cette technique permet d'obtenir des capteurs de très bonne qualité, mais elle est manifestement longue et onéreuse.

Il existe un autre procédé qui consiste à réaliser, dans une plaque épaisse, des ébauches de corps de capteur, puis à déposer les moyens de jauge de contrainte sur une face de la plaque, et enfin à découper la plaque avec ces jauges de contrainte pour séparer les ébauches les unes des autres et obtenir les capteurs. Cette technique apporte des améliorations, notamment de gain de temps, par rapport à la technique précédente, mais présente encore des inconvénients, notamment du fait de l'épaisseur de la plaque.

L'épaisseur de la plaque rend en effet délicate la mise en oeuvre des moyens de découpe et ces derniers engendrent des contraintes thermiques qui peuvent au moins partiellement détériorer les moyens de jauge de contrainte, diminuant de ce fait la sensibilité et la précision des capteurs ainsi obtenus.

US-A-5 791 035 décrit un procédé pour réaliser des capteurs de pression consistant:
- à réaliser une pluralité de corps de capteur de forme cylindrique avec deux portions de diamètre différent définissant un épaulement et avec une face fermée;
- à réaliser une pluralité de percées traversant une plaque;
- à placer chaque corps de capteur en association avec la plaque comportant la pluralité de percées traversantes, de façon à que la portion de chaque corps cylindrique de diamètre inférieur plonge dans une percée traversante jusqu'à ce que tous les épaulements viennent en appui contre une même face de la plaque;
- à réaliser une soudure de chaque corps cylindrique avec la plaque;
- à rectifier les portions de diamètre supérieur de chaque corps de capteur;
- à déposer sur la face fermée des moyens de jauge; et
- à enlever chaque corps de capteur de la plaque.

La présente invention a donc pour but de mettre en oeuvre un procédé de réalisation de capteurs à jauge de contrainte en grandes quantités, qui pallie les inconvénients des procédés mentionnés ci-dessus.

Plus précisément, la présente invention a pour objet un procédé pour réaliser des capteurs à jauge de contrainte, consistant:
- à réaliser une pluralité de corps de capteur, chaque corps de capteur comportant une embase de forme cylindrique, un téton de forme cylindrique solidaire d'une face d'extrémité de ladite embase, les axes de l'embase et dudit téton étant sensiblement confondus pour définir sur cette face un épaulement, cedit téton ayant une hauteur d'une valeur "h" mesurée à partir dudit épaulement,
- à réaliser une pluralité de percées traversantes dans une plaque d'épaisseur "e", ces percées traversantes étant espacées les unes des autres sensiblement d'une valeur de pas "p", cette valeur de pas "p" étant supérieure à la section transversale de ladite embase et l'épaisseur "e" de la plaque étant inférieure à la valeur "h" de la hauteur des tétons,
- à placer chaque corps de capteur en association avec la plaque comportant la pluralité de percées traversantes, de façon que chaque téton plonge dans une percée traversante jusqu'à ce que tous les épaulements viennent en appui contre une même première face de la plaque,
- à réaliser une soudure de chaque téton avec le bord, appartenant à la seconde face de la plaque opposée à ladite première face, de la percée traversante dans laquelle est placé ledit téton,
- à rectifier ladite seconde face de la plaque et les parties de tétons qui en débordent, pour obtenir une plaque rectifiée comportant une seconde face plane rectifiée, l'épaisseur de la plaque étant réduite à une valeur,
- à déposer, sur la seconde face plane rectifiée, des moyens de jauge de contrainte, et
- à découper la plaque rectifiée en suivant une surface de découpe entourant chaque corps de capteur dans sa percée et soudé à ladite plaque, pour obtenir une pluralité de capteurs unitaires.

D'autres caractéristiques et avantages de la présente invention apparaîtront au cours de la description suivante donnée en regard des dessins annexés à titre illustratif, mais nullement limitatif, dans lesquels:

Les figures 1 et 2 représentent, respectivement en vue partielle de dessus et en coupe, une plaque utilisée pour la mise en oeuvre du procédé selon l'invention pour réaliser des capteurs à jauge de contrainte, la coupe selon la figure 2 étant référencée II-II sur la figure 1,

La figure 3 représente une vue en coupe longitudinale de deux corps de capteur utilisés pour la mise en oeuvre du procédé selon l'invention,

Les figures 4 à 8 représentent différentes phases successives de la mise en oeuvre du procédé selon l'invention,

La figure 9 représente, en vue de dessus, une phase de découpe de la plaque selon les figures 1 et 2, pour obtenir les capteurs à jauge de contrainte, et

Les figures 10 à 12 représentent schématiquement trois vues permettant de mettre en évidence la réalisation des connexions électriques avec un capteur obtenu par le procédé selon l'invention illustré par les figures 1 à 9.

Les figures représentant un seul mode de mise en oeuvre du procédé selon l'invention, les mêmes références y désignent les mêmes moyens, quelle que soit la forme sous laquelle ils sont représentés.

Le procédé selon l'invention permet de réaliser des capteurs à jauge de contrainte en grandes quantités.

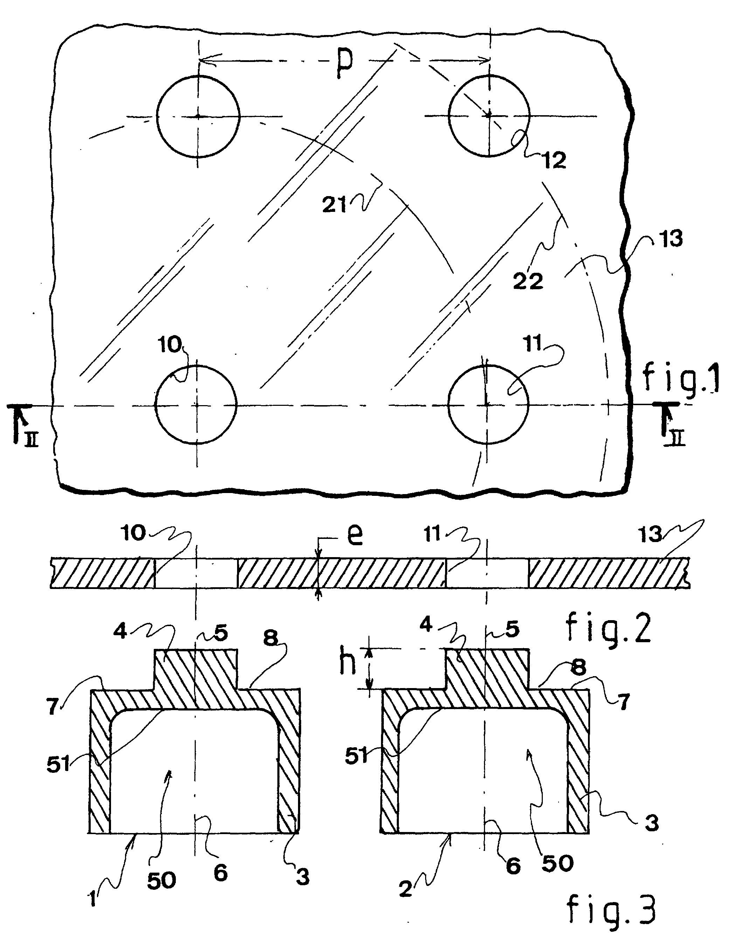

Ce procédé consiste tout d'abord à réaliser, par exemple par usinage avec un tour ou analogue, une pluralité de corps de capteur 1, 2, ..., figure 3, dans un matériau comme des barres d'acier inoxydable à durcissement structural, comme celui connu sous la référence commerciale "X17UA".

Chaque corps de capteur comporte une embase 3 de forme cylindrique, d'une hauteur par exemple égale à 5 mm, un téton 4 de forme cylindrique solidaire d'une face d'extrémité 7 de l'embase, les axes 5, 6 de l'embase et du téton étant sensiblement confondus pour définir un épaulement 8 sur cette face d'extrémité 7 de l'embase, le téton 4 ayant une hauteur d'une valeur "h" mesurée à partir de l'épaulement 8 qui peut par exemple être de l'ordre de 1 mm.

Chaque embase 3 comporte en outre, comme dans les capteurs de l'art antérieur, une cavité 50 dont le fond 51 est situé vers la face d'extrémité 7 supportant le téton 4. L'épaisseur de la paroi comprise entre la face d'extrémité 7 et le fond 51 est relativement faible, pour pouvoir subir des déformations, par exemple un gonflement, par exemple sous l'effet de pressions de fluides de valeurs prédéterminées.

Dans une deuxième phase qui peut d'ailleurs être menée en parallèle avec la première phase décrite ci-dessus, le procédé consiste à réaliser une pluralité de percées traversantes 10, 11, 12, ... dans une plaque 13 d'épaisseur "e" inférieure à "h", par exemple de l'ordre de 0,8 mm.

Ces percées traversantes sont par exemple au nombre d'environ une cinquantaine et espacées les unes des autres sensiblement d'une valeur de pas "p". Cette valeur de pas "p" est en tout état de cause supérieure à la section transversale des embases 3 décrites ci-dessus. Les figures 1 et 2 représentent partiellement en vue de dessus et en coupe, la plaque comportant les percées traversantes 10-12 comme décrit ci-dessus.

De façon préférentielle, la plaque 13, les embases 3 et les tétons 4 sont réalisés dans des matériaux ayant sensiblement le même coefficient de dilatation thermique. Ils seront même avantageusement réalisés dans le même matériau, par exemple le matériau cité ci-avant à titre d'exemple.

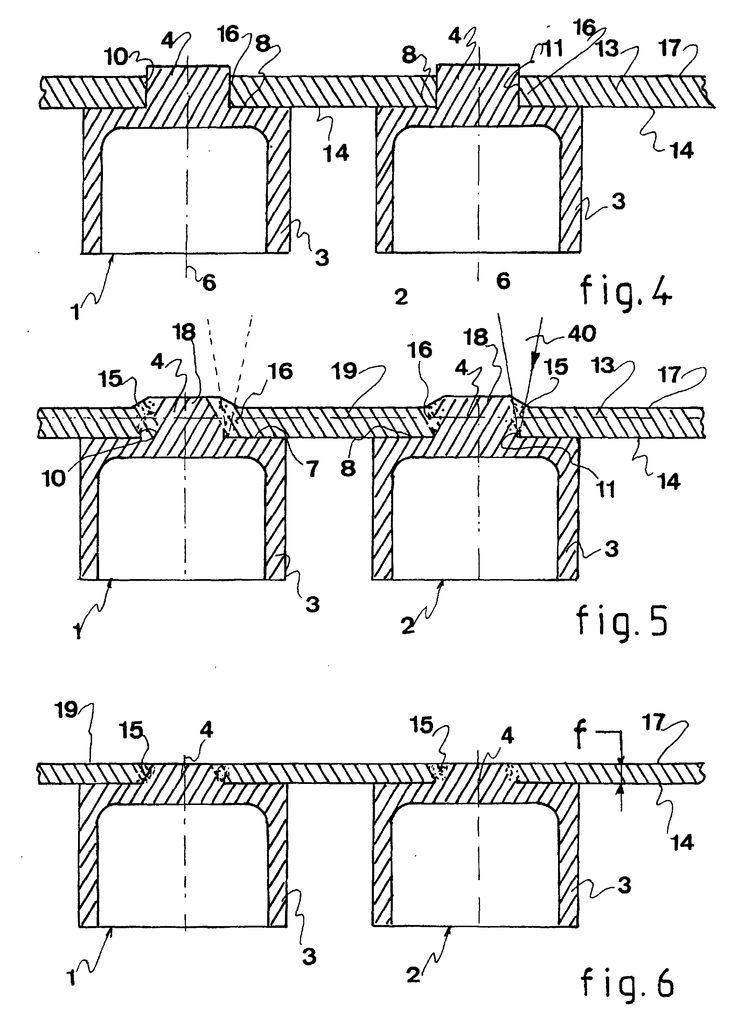

Quand ces deux phases sont terminées, le procédé consiste alors, dans une troisième phase, à placer chaque corps de capteur 1, 2, ..., en association avec la plaque 13 comportant la pluralité de percées traversantes 10, 11, ..., de façon que chaque téton 4 plonge dans une percée traversante jusqu'à ce que tous les épaulements 8 viennent en appui contre une même première face 14 de la plaque 13. Cette troisième phase est plus particulièrement illustrée par la figure 4.

Il est avantageux de placer les corps de capteur dans les percées traversantes et de maintenir ce montage comme illustré sur la figure 4, au moyen, par exemple, d'un conformateur du type presseur ou analogue. Ce dernier moyen n'a pas été spécifiquement représenté car il ne présente aucune difficulté de réalisation et de mise en oeuvre par un homme du métier.

Quand cette troisième phase est accomplie, tout en maintenant le montage des corps de capteur dans la plaque via les percées traversantes comme décrit ci-dessus, on peut, dans une quatrième phase, procéder à la réalisation de la soudure 15 de chaque téton 4 avec le bord 16, appartenant à la seconde face 17 de la plaque 13 opposée à la première face 14, de la percée traversante dans laquelle est placé le téton. Cette quatrième phase est plus particulièrement illustrée par la figure 5.

Dans une mise en oeuvre préférentielle, la soudure 15 est effectuée par un bombardement électronique sous vide, le faisceau d'électrons étant focalisé sur la zone du bord 16 défini ci-dessus.

Pour effectuer la soudure, le montage "corps de capteur-plaque" et le faisceau d'électrons sont bien entendu déplacés l'un par rapport à l'autre. En fonction des moyens mis à sa disposition, l'homme du métier qui doit mettre en oeuvre le procédé selon l'invention pourra par exemple choisir parmi les solutions définies ci-après ou des combinaisons de celles-ci:
- déplacement du faisceau d'électrons par rapport au montage qui est maintenu fixe,
- déplacement du montage par rapport au faisceau d'électrons, ce déplacement pouvant être une rotation autour d'un axe parallèle au faisceau d'électrons, ou bien un déplacement en "X" et "Y" dans un plan perpendiculaire à l'axe de ce faisceau.

Dans une réalisation préférentielle, la soudure 15 des tétons 4 avec le bord 16 des percées traversantes 10-12 s'effectuent en commençant par la soudure du téton qui plonge dans la percée qui est sensiblement située au centre de la plaque 13, par exemple la percée 10 en supposant celle-ci au centre de la plaque, puis en réalisant la soudure des tétons plongeant dans les percées sensiblement situées sur des cercles 21, 22, ... centrés sur la percée centrale 10, et en s'éloignant peu à peu de cette percée centrale. En référence à la figure 1, cela revient à effectuer les soudures des tétons qui sont placés dans les percées 11 situées sur le premier cercle 21, puis les soudures des tétons qui sont placés dans les percées situées sur le deuxième cercle 22, et ainsi de suite sur tous les cercles (ou portions de cercles) jusqu'au bord de la plaque 13.

Quand cette quatrième phase est terminée, c'est-à-dire quand toutes les soudures des tétons avec la plaque ont été réalisées, le procédé consiste, dans une cinquième phase, à rectifier la seconde face 17 de la plaque 13 et les parties 18 de tétons qui en débordent, pour obtenir une plaque rectifiée comportant une seconde face rectifiée 19 parfaitement plane, l'épaisseur de la plaque étant ainsi réduite à une valeur "f", par exemple réduite d'environ 5/100 mm par rapport à la valeur "e" définie ci-avant, la valeur "f" étant alors égale à ["e" - 5/100 mm].

Sur la figure 5, la seconde face rectifiée 19 n'est pas encore obtenue mais simplement indiquée par une ligne 19 en traits interrompus qui se trouve en dessous de la seconde face 17. C'est la figure 6 qui représente le montage "corps de capteur-plaque" après les opérations de soudure et de rectification, faisant apparaître une seconde face 19 parfaitement plane et une plaque d'une épaisseur "f" plus faible que son épaisseur initiale "e".

De façon préférentielle, le procédé consiste ensuite à faire subir à l'ensemble obtenu après la cinquième phase définie ci-dessus, et avant la mise en oeuvre des phases suivantes, un traitement thermique sous contrainte, par exemple dans un conformateur. Avec les matériaux définis ci-avant, ce traitement thermique consiste à soumettre l'ensemble obtenu à ce stade du procédé, à une température de 480°C, à ± 5°C, pendant environ une heure.

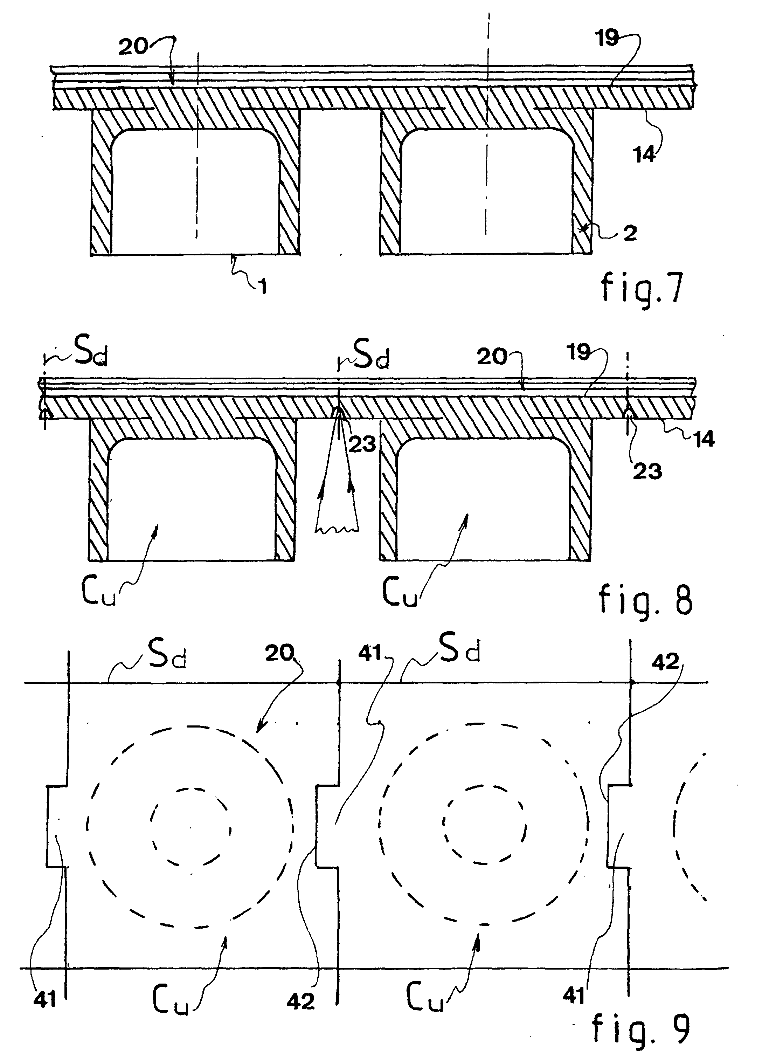

Quand cette phase de traitement thermique sous contrainte est terminée, le procédé consiste, dans une sixième phase, à déposer, sur la seconde face plane rectifiée 19, des moyens de jauges de contraintes 20. Ces moyens de jauges de contraintes et la manière de les déposer sur une face plane sont bien connus en eux-mêmes. Ils ne seront donc pas plus amplement décrits ici, dans l'unique souci de simplifier la présente description. Le résultat obtenu est illustré sur la figure 7.

Enfin, quand cette sixième phase est terminée, le procédé consiste, figures 8 et 9, à découper la plaque 13 rectifiée en suivant une surface de découpe Sd qui entoure chaque corps de capteur 1, 2, ... dans sa percée et soudé à la plaque, pour obtenir une pluralité de capteurs unitaires Cu.

Dans une mise en oeuvre préférentielle, la découpe de la plaque rectifiée est effectuée en attaquant cette découpe sur la première face 14 de la plaque 13, comme illustré sur la figure 8. Il peut cependant être avantageux, avant la découpe définitive de la plaque 13 rectifiée, d'effectuer une phase de prédécoupe 23 sur la première face 14 de la plaque 13, par exemple par électroérosion. La découpe définitive selon la surface de découpe Sd est, elle, par exemple réalisée à l'aide d'un laser de puissance du type CO₂ ou analogue.

Du fait de la faible épaisseur de la plaque à découper, les effets thermiques induits par la découpe sur les moyens de jauge de contrainte sont quasiment inexistants car l'apport en énergie pour obtenir cette découpe est très faible.

Dans un but qui sera explicité ci-après, il est avantageux que la surface de découpe Sd soit une surface sensiblement cylindrique dissymétrique, comme celle qui est illustrée sur la figure 9, c'est-à-dire présentant une section transversale en forme de carré mais comportant, sur deux côtés opposés, des encoches de formes complémentaires respectivement en saillie 41 et en creux 42.

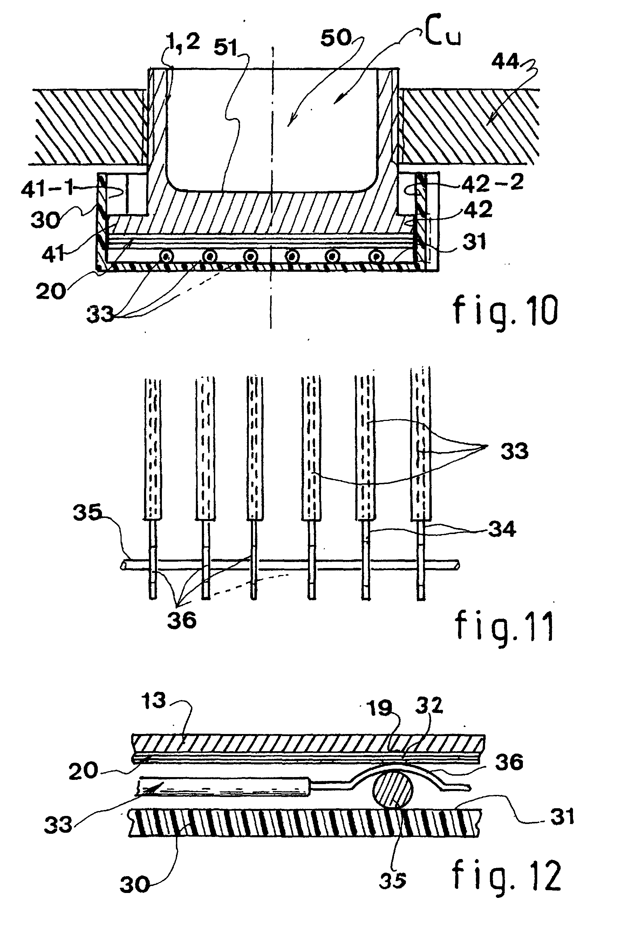

En effet, il est dans certains cas avantageux que chaque capteur unitaire Cu puisse être placé dans un boîtier 30 de forme sensiblement cylindrique, figure 10, la section d'emboîtement de ce boîtier ayant une forme sensiblement complémentaire de la section transversale de la surface de découpe Sd décrite ci-dessus.

Le capteur unitaire Cu est alors enfiché dans le boîtier 30 de façon que les moyens de jauge de contrainte 20 soient situés vers le fond 31 du boîtier et que leur connexion électrique s'effectue lors de cet l'enfichage.

Pour ce faire, la connexion électrique des moyens de jauge de contrainte 20 est obtenue par exemple pression de parties 32 de ces moyens de jauge de contrainte sur des moyens de conducteurs électriques 33 préalablement disposés dans le fond du boîtier.

Ces moyens de conducteurs électriques 33 sont par exemple constitués par des fils électriques conducteurs 34 surmontant des moyens de bossage 35 situés dans le fond 31 du boîtier 30 pour former des portions de fils conducteurs en saillie 36 par rapport à ce fond 31 de façon que, lorsque le capteur unitaire Cu est enfiché dans le boîtier 30, les parties des moyens de jauge de contrainte 32 à relier électriquement, par exemple à la source d'alimentation en énergie électrique et aux instruments de mesure, viennent au contact de ces portions de fils électriques conducteurs en saillie 36.

Il est à noter que, par la présence des deux encoches complémentaires en saillie 41 et en creux 42 dans la surface de découpe Sd de chaque capteur unitaire Cu, et des parties correspondantes 41-1 et 42-2 dans la paroi du boîtier 30, le capteur unitaire ne peut être disposé dans ce boîtier que d'une seule et unique façon. Il ne peut donc exister qu'une parfaite indexation entre les moyens de jauge de contrainte 20 et les moyens de conducteurs électriques 33, et donc une connexion électrique de chaque capteur sans erreur d'adressage.

Avec un capteur à jauge de contrainte réalisé selon le procédé décrit ci-dessus, il est par exemple possible de mesurer des pressions dans une conduite de fluide 44, figure 10. La cavité 50 est en communication directe avec l'intérieur de la conduite de fluide et la pression exercée par ce fluide est appliquée dans le fond de cette cavité. Sa mesure est effectuée de façon connue en elle-même au moyen des signaux électriques élaborés par les moyens de jauge de contrainte 20, comme avec les capteurs obtenus par les procédés de l'art antérieur. Cependant, avec le procédé selon l'invention, les capteurs à jauge de contrainte sont réalisés plus facilement en grandes quantités, tout en évitant les inconvénients mentionnés ci-avant.

## Revendications

1. Procédé pour réaliser des capteurs à jauge de contrainte, consistant:
- à réaliser une pluralité de corps de capteur (1, 2), chaque corps de capteur comportant une embase (3) de forme cylindrique, un téton (4) de forme cylindrique solidaire d'une face (7) d'extrémité de ladite embase, les axes (5, 6) de l'embase et dudit téton étant sensiblement confondus pour définir sur cette face d'extrémité (7) un épaulement (8), cedit téton (4) ayant une hauteur d'une valeur "h" mesurée à partir dudit épaulement (8),
- à réaliser une pluralité de percées traversantes (10, 11, 12) dans une plaque (13) d'épaisseur "e", ces percées traversantes étant espacées les unes des autres sensiblement d'une valeur de pas "p", cette valeur de pas "p" étant supérieure à la section transversale de ladite embase (3) et l'épaisseur "e" de la plaque étant inférieure à la valeur "h" de la hauteur des tétons (4),
- à placer chaque corps de capteur (1, 2) en association avec la plaque (13) comportant la pluralité de percées traversantes (10, 11, 12), de façon que chaque téton (4) plonge dans une percée traversante jusqu'à ce que tous les épaulements (8) viennent en appui contre une même première face (14) de la plaque (13),
- à réaliser une soudure (15) de chaque téton (4) avec le bord (16), appartenant à la seconde face (17) de la plaque (13) opposée à ladite première face (14), de la percée traversante dans laquelle est placé ledit téton,
- à rectifier ladite seconde face (17) de la plaque (13) et les parties (18) de tétons qui en débordent, pour obtenir une plaque rectifiée comportant une seconde face plane rectifiée (19), l'épaisseur de la plaque étant réduite à une valeur "f",
- à déposer, sur la seconde face plane rectifiée (19), des moyens de jauge de contrainte (20), et
- à découper la plaque (13) rectifiée en suivant une surface de découpe (Sd) entourant chaque corps de capteur (1, 2) dans sa percée et soudé à ladite plaque, pour obtenir une pluralité de capteurs unitaires (Cu).

2. Procédé selon la revendication 1, dans lequel après la phase de rectification de ladite plaque, l'ensemble obtenu est soumis à un traitement thermique sous contrainte.

3. Procédé selon l'une des revendications 1 et 2, dans lequel la plaque (13), les embases (3) et les tétons (4) sont réalisés dans des matériaux ayant sensiblement le même coefficient de dilatation thermique.

4. Procédé selon l'une des revendications 1 à 3, dans lequel la soudure (15) des tétons (4) avec le bord (16) des percées traversantes (10-12) s'effectuent en commençant par la soudure du téton qui plonge dans la percée (10) qui est sensiblement située au centre de la plaque (13), puis en réalisant la soudure des tétons plongeant dans les percées sensiblement situées sur des cercles centrés (21, 22) sur ladite percée centrale, en s'éloignant peu à peu de cette percée centrale (10).

5. Procédé selon l'une des revendications 1 à 4, dans lequel la soudure (15) est effectuée par bombardement électronique sous vide.

6. Procédé selon l'une des revendications 1 à 5, dans lequel la découpe de la plaque rectifiée est effectuée en attaquant cette découpe sur la première face (14) de la plaque (13).

7. Procédé selon la revendication 6, dans lequel la découpe de la plaque (13) rectifiée comporte une phase préliminaire de prédécoupe (23) sur la première face (14) de la plaque (13).

8. Procédé selon l'une des revendications 1 à 7, dans lequel la surface de découpe (Sd) est une surface sensiblement cylindrique dissymétrique.

9. Procédé selon l'une des revendications 1 à 8, consistant en outre à enficher chaque capteur unitaire (Cu) dans un boîtier (30) sensiblement cylindrique, la section d'emboîtement dudit boîtier ayant une forme sensiblement complémentaire de la section de la surface de découpe (Sd), ledit capteur unitaire (Cu) étant enfiché dans ledit boîtier (30) de façon que les moyens de jauge de contrainte (20) soient situés vers le fond (31) dudit boîtier (30) et que leur connexion électrique s'effectue lors de l'enfichage.

10. Procédé selon la revendication 9, dans lequel la connexion électrique des moyens de jauge de contrainte (20) lors de l'enfichage du capteur unitaire (Cu) dans le boîtier (30) est obtenue par pression de parties (32) des moyens de jauge de contrainte (20) sur des moyens de conducteurs électriques (33) préalablement disposés dans le fond dudit boîtier, cesdits moyens de conducteurs électriques étant constitués par des fils conducteurs électriques (34) surmontant des moyens de bossage (35) situés dans le fond (31) dudit boîtier (30) pour former des portions de fils conducteurs en saillie (36) par rapport à ce fond (31) de façon que, lorsque le capteur unitaire (Cu) est enfiché dans le boîtier (30), les parties des moyens de jauge de contrainte (32) à relier électriquement viennent au contact de ces portions de fils conducteurs électriques en saillie (36).

## Claims

1. A method of making strain gauge sensors, the method consisting:
· in making a plurality of sensor bodies (1, 2), each sensor body comprising a cylindrically-shaped socket (3), and a cylindrically-shaped stud (4) secured to an end face (7) of said socket, the axes (5, 6) of the socket and the stud coinciding substantially to define a shoulder (8) on said end face (7), said stud (4) having a height "h" measured from said shoulder (8);
· in providing a plurality of through holes (10, 11, 12) in a plate (13) of thickness "e", said through holes being spaced apart from one another substantially at a pitch "p", the value of the pitch "p" being greater than the cross-section of said socket (3), and the thickness "e" of the plate being less than the height "h" of the studs (4);
· in placing each sensor body (1, 2) in association with the plate (13) having the plurality of through holes (10, 11, 12), in such a manner that each stud (4) penetrates into a through hole until all of the shoulders (8) come to bear against a common first face (14) of the plate (13);
· in welding (15) each stud (4) to the edge (16) of the through hole in which said stud is placed where it joins the second face (17) of the plate (13) opposite from said first face (14);
· in rectifying said second face (17) of the plate (13) and the projecting portions (18) of the stud so as to obtain a rectified plate having a rectified plane second face (19), the thickness of the plate being reduced to a value "f";
· in depositing strain gauge means (20) on the rectified plane second face (19); and
· in cutting up the rectified plate (13) along a cutting surface (Sd) surrounding each sensor body (1, 2) in its hole and welded to said plate in order to obtain a plurality of individual sensors (Cu).

2. A method according to claim 1, in which the assembly obtained after the stage of rectifying said plate is subjected to heat treatment under stress.

3. A method according to claim 1 or claim 2, in which the plate (13), the sockets (3) and the studs (4) are made of materials that have substantially the same coefficient of thermal expansion.

4. A method according to any one of claims 1 to 3, in which the studs (4) are welded to the edges (16) of the through holes (10-12) starting by welding the stud which penetrates into the hole (10) situated substantially in the center of the plate (13) and then welding the studs that penetrate into holes lying substantially on circles (21, 22) centered on said central hole, going progressively away from said central hole (10).

5. A method according to any one of claims 1 to 4, in which the welding (15) is performed by electron bombardment in a vacuum.

6. A method according to any one of claims 1 to 5, in which the rectified plate is cut up by initiating said cutting on the first face (14) of the plate (13).

7. A method according to claim 6, in which the cutting up of the rectified plate (13) includes a preliminary stage of making precuts (23) in the first face (14) of the plate (13).

8. A method according to any one of claims 1 to 7, in which the cutting surface (Sd) is an asymmetrical substantially prismatic surface.

9. A method according to any one of claims 1 to 8, further consisting in plugging each individual sensor (Cu) in a substantially prismatic dish (30), the engagement section of said dish being substantially complementary in shape to the section of the cutting surface (Sd), said individual sensor (Cu) being engaged in said dish (30) in such a manner that the strain gauge means (20) are situated facing the bottom (31) of said dish (30) and in such a manner that they are connected electrically during said engagement.

10. A method according to claim 9, in which the strain gauge means (20) are electrically connected during engagement of the individual sensor (Cu) in the dish (30) by portions (32) of the strain gauge means (20) pressing against electrical conductor means (33) previously placed in the bottom of said dish, said electrical conductor means being constituted by electrically conductive wires (34) overlying bulge means (35) situated on the bottom (31) of said dish (30) so as to form conductor wire portions (36) that project relative to said bottom (31) in such a manner that when the individual sensor (Cu) is engaged in the dish (30) the portions of the strain gauge means (32) that are for making electrical connections come into contact with said projecting electrically conductive wire portions (36).

## Patentansprüche

1. Verfahren zum Herstellen von Dehnungssensoren, das darin besteht:
- mehrere Sensorkörper (1, 2) herzustellen, wovon jeder einen Grundkörper (3) mit zylindrischer Form und einen mit einer Stirnfläche (7) des Grundkörpers fest verbundenen Ansatz (4) mit zylindrischer Form aufweist, wobei die Achsen (5, 6) des Grundkörpers und des Ansatzes im wesentlichen zusammenfallen, um auf dieser Stirnfläche (7) eine Schulter (8) zu definieren, wobei dieser Ansatz (4) eine Höhe mit einer Größe "h" besitzt, die ab der Schulter (8) gemessen wird,
- mehrere Durchlochungen (10, 11, 12) in einer Platte (13) mit einer Dicke "e" herzustellen, wobei diese Durchlochungen im wesentlichen um einer Schrittweitengröße "p" voneinander beabstandet sind, wobei diese Schrittweitengröße "p" größer als der Querschnitt des Grundkörpers (3) ist und die Dicke "e" der Platte kleiner als die Größe "h" der Höhe der Ansätze (4) ist,
- jeden Sensorkörper (1, 2) in bezug auf die Platte (13), die die mehreren Durchlochungen (10, 11, 12) aufweist, anzuordnen, so daß jeder Ansatz (4) in eine Durchlochung eingeschoben wird, bis sämtliche Schultern (8) an derselben ersten Fläche (14) der Platte (13) anliegen,
- ein Verschweißen (15) jedes Ansatzes (4) mit dem zu der der ersten Fläche (14) gegenüberliegenden zweiten Fläche (17) der Platte (13) gehörenden Rand (16) der Durchlochung, in der der Ansatz angeordnet ist, auszuführen,
- die zweite Fläche (17) der Platte (13) und die daran angrenzenden Teile (18) der Ansätze zu begradigen, um eine begradigte Platte zu erhalten, die eine begradigte ebene zweite Fläche (19) besitzt, wobei die Dicke der Platte auf eine Größe "f" verringert wird,
- auf der zweiten begradigten ebenen Fläche (19) Dehnungsmittel (20) anzubringen und
- die begradigte Platte (13) längs einer Schnittfläche (Sd), die jeden Sensorkörper (1, 2) in ihrer Durchlochung umgibt und mit der Platte verschweißt ist, auszuschneiden, um mehrere einteilige Sensoren (Cu) zu erhalten.

2. Verfahren nach Anspruch 1, bei dem nach der Phase der Begradigung der Platte die erhaltene Gesamtheit einer Wärmebehandlung unter Belastung unterworfen wird.

3. Verfahren nach einem der Ansprüche 1 und 2, bei dem die Platte (13), die Grundkörper (3) und die Ansätze (4) aus Materialien hergestellt werden, die im wesentlichen den gleichen Wärmeausdehnungskoeffizienten besitzen.

4. Verfahren nach einem der Ansprüche 1 bis 3, bei dem das verschweißen (15) der Ansätze (4) mit dem Rand (16) der Durchlochungen (10-12) ausgeführt wird, indem mit dem Verschweißen des Ansatzes, der in jene Lochung (10) eingeschoben ist, die sich im wesentlichen im Zentrum der Platte (13) befindet, begonnen wird und indem dann das Verschweißen der Ansätze, die in die Lochungen eingeschoben sind, die sich im wesentlichen auf auf die zentrale Lochung zentrierten Kreisen (21, 22) befinden, ausgeführt wird, indem der Abstand von dieser zentralen Lochung (10) schrittweise erhöht wird.

5. Verfahren nach einem der Ansprüche 1 bis 4, bei dem das Schweißen (15) durch Elektronenbeschuß im Vakuum ausgeführt wird.

6. Verfahren nach einem der Ansprüche 1 bis 5, bei dem das Zuschneiden der begradigten Platte dadurch ausgeführt wird, daß dieser Schnitt auf der ersten Fläche (14) der Platte (13) vorgenommen wird.

7. Verfahren nach Anspruch 6, bei dem das Zuschneiden der begradigten Platte (13) eine vorhergehende Vorschneidephase (23) auf der ersten Fläche (14) der Platte (13) umfaßt.

8. Verfahren nach einem der Ansprüche 1 bis 7, bei dem die Schnittoberfläche (Sd) eine asymmetrische, im wesentlichen zylindrische Oberfläche ist.

9. Verfahren nach einem der Ansprüche 1 bis 8, das außerdem darin besteht, jeden einzelnen Sensor (Cu) in ein im wesentlichen zylindrisches Gehäuse (30) einzustecken, wobei der Einsteckquerschnitt des Gehäuses eine zum Querschnitt der Schnittoberfläche (Sd) im wesentlichen komplementäre Form hat, wobei der einzelne Sensor (Cu) in das Gehäuse (30) in der Weise eingesteckt wird, daß sich die Dehnungsmittel (20) gegenüber dem Boden (31) des Gehäuses (30) befinden und daß ihr elektrischer Anschluß beim Einstecken erfolgt.

10. Verfahren nach Anspruch 9, bei dem der elektrische Anschluß der Dehnungsmittel (20) beim Einstecken des einzelnen Sensors (Cu) in das Gehäuse (30) durch Pressen von Teilen (32) der Dehnungsmittel (20) auf vorher im Boden des Gehäuses angeordnete elektrische Leitermittel (33) erhalten wird, wobei diese elektrischen Leitermittel aus elektrisch leitenden Drähten (34) gebildet sind, die auf Höckermitteln (35) angebracht sind, die sich im Boden (31) des Gehäuses (30) befinden, um Leiterdrahtabschnitte (36) zu bilden, die in bezug auf diesen Boden (31) vorstehen, derart, daß die Teile der Dehnungsmittel (32), die elektrisch verbunden werden sollen, dann, wenn der einzelne Sensor (Cu) in das Gehäuse (30) eingesteckt ist, mit diesen vorstehenden Abschnitten elektrischer Leitungsdrähte in Kontakt gelangen.
